# EUROPEAN PATENT APPLICATION

(11) **EP 2 515 515 A1**
(43) Date of publication of application: **24.10.2012**
(21) Application number: 11162788.1
(22) Date of filing: 18.04.2011
(51) Int. Cl.: H04M 3/44, H04M 7/00

(54) **Method of connecting a conventional telephone to the internet via a gateway**

(71) Applicant: 5V Technologies, Taiwan Ltd, Nangang District Taipei City 115 (CN)
(72) Inventor: Ueng, Jyh-Chang, 115, Taipei City (TW); Lee, Fang-Hsin, 115, Taipei City (TW)
(74) Representative: Lang, Christian

(57) **Abstract**

The present invention provides a method for connecting an analogue, wirebound conventional telephone with a display to the internet via an internet telephony gateway. By message processors receiving and sending messages (M) as well as processing message (M) between the conventional telephone (1) and internet telephone service system (23), and by a command set (221) built-in second message processor (22), the user is capable of controlling a phone book containing all contacts stored on an internet telephone service system (23) using a conventional telephone (1). In practice, the user can press the keys (K) on the conventional telephone (1) to select a contact (231) displayed on the display module (10) and then establish a call to the contact (231); additional system information such as unanswered internet calls or remaining credits of the internet telephone service system (23) can also be displayed via the display module.

## Description

### BACKGROUND OF THE INVENTION

### 1. Field of the Invention:

The present invention relates to a method for applying internet telephone service by conventional telephone with internet telephony gateway, wherein user is capable of selecting and dialing an account (digital or non-digital) on an account menu provided by an internet telephone service system by pressing keys of a conventional telephone.

### 2. Brief Description of the Related Art:

Existing internet telephony gateway that supports the internet telephone service which uses non-digital account as identification is generally of the following method:
1. Creating a mapping table of internet telephone accounts and speed dials (consist of numbers) in the gateway.
2. Obtaining a speed dial of an account that a user wants to call from the mapping table that is printed out in advance, and dialing according to the speed dial.
3. The speed dial being received by the internet telephony gateway, a corresponding account being obtained from the mapping table therein, and the internet telephony gateway being connected to the internet to make a call to the corresponding account.

However, the foregoing method has the following deficiencies:
1. The user has to edit the mapping table of internet telephone accounts and speed dials beforehand via the managing mechanism of the internet telephony gateway such as a web page interface. This may not be a problem to the users who are familiar with this kind of products; however, for those who are not familiar with the internet or this kind of devices, it is inconvenient and not user friendly.
2. The mapping table has to be printed out in advance to allow the user to look up when making a call. The steps of printing and checking increase the using complexity; also, when the mapping table changes, it needs to be printed out again.
3. Once the account of the person the user wants to call is not in the mapping table, the user has to sign in the managing mechanism of the internet telephony gateway before dialing to change the mapping table or create a mapping table, and then being able to make a call by a speed dial.

### SUMMARY OF THE INVENTION

In order to overcome the deficiencies of the prior art, a primary object of the present invention is to provide a method for applying internet telephone service by conventional telephone with internet telephony gateway; wherein a conventional telephone having a Caller ID (Identification) display module is signally connected to an internet telephony gateway, and the internet telephony gateway has a first message processor, a second message processor, a third message processor, and a internet telephone service system therein.

Wherein, the Caller ID display module is a Caller ID display system installed in the conventional telephone; that is, the Caller ID display module is capable of displaying the caller's information including calling number or calling account. The first message processor is a Dual Tone Multi-Frequency system (hereinafter DTMF system); the user presses several keys on the conventional telephone, each key corresponds to an analog DTMF message that is then sent to the first message processor. The first message processor processes the received analog DTMF message and converts the analog DTMF message to digital number based on required DTMF standards (such as ITU Q23), and sends the digital number to the second message processor. The second message processor connects to the internet telephone service system of the internet telephony gateway and gets an account menu thereof, and then sends the account as a message to the third message processor. The third message processor encodes the received account information into a Caller ID message based on the required Caller ID standards and further sends the message to the Caller ID display module of the conventional telephone, and the account information is displayed thereon for the user's reference.

The first advantage of the present invention is that the present invention is capable of setting a command set in the second message processor; and when the user dials the keys of the conventional telephone, a matching is ran by the command set on what kind of message is to be sent to the internet telephone service system according to the received DTMF message. The user can operate the internet telephone service system by simply pressing the keys to select an account of the account menu thereof and make a call to the account.

The second advantage of the present invention is that the conventional telephone still has the general telephone features and is capable of making calls in a normal way. As the foregoing, when the user wants to make an internet phone call via the internet telephone service system, he or she can press the keys, and the corresponding messages will be matched in the command set of the second message processor. This allows the internet telephone service to be applied with the conventional telephone while no additional equipment other than an internet telephony gateway is required.

The third advantage of the present invention is that the internet telephone service system can be applied to the most commonly used online service such as Skype, Google Talk or SIP (Session Initiation Protocol). As those systems also provide client software for PC, the user is capable of updating the account menu (contact list) of the internet telephone service system on a PC by running those client software and making a call via the conventional telephone with the internet telephony gateway , wherein the account menu can be updated to the conventional telephone anytime.

The fourth advantage of the present invention is that the most commonly used online service such as Skype, Google Talk or SIP also provides features of calling a local telephone or mobile phone; and to use the service, credits are to be purchased beforehand. Therefore, it is important that the user is capable of checking the credits conveniently. The present invention allows the user to check the credits on the internet telephone service system directly by the telephone keys and the result can be displayed on the Caller ID display module immediately.

### BRIEF DESCRIPTION OF THE INVENTION

The detail structure, the applied principle, the function and the effectiveness of the present invention can be more fully understood with reference to the following description and accompanying drawings, in which:

Fig. 1 is a schematic representation of the overall device according to the present invention;

Fig. 2 is a simple schematic representation of the conventional telephone according to the present invention;

Fig. 3 is a drawing illustrating the account menu according to the present invention;

Fig. 4 is a drawing illustrating the command set according to the present invention;

Fig. 5 is a flow chart illustrating the steps of the present invention; and

Fig. 6 is a flow chart illustrating the other steps of the present invention.

### DETAILED DESCRIPTION OF THE PREFERRED EMBODIMENTS

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

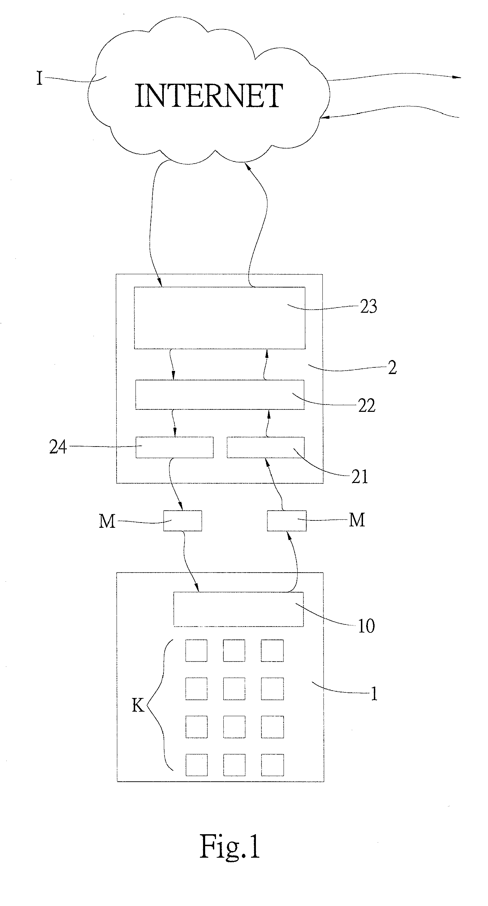

With reference to Fig. 1, the present invention provides a method for applying internet telephone service system by conventional telephone with internet telephony gateway, wherein the method comprises steps of: providing a conventional telephone 1 having a Caller ID display module 10 and is signally connected to an internet telephony gateway 2; an user dialing keys K on the conventional telephone 1 and sending a message M to a first message processor 21 of the internet telephony gateway 2; the first message processor 21 processing the message M and sending the message M to a second message processor 22 of the internet telephony gateway 2; the second message processor 22 activating an internet telephone service system 23 of the internet telephony gateway 2 and connecting to internet I; an account menu 230 built-in the internet telephone service system 23 sending an account 231 to the second message processor 22; the second message processor 22 sending the account 231 to a third message processor 24 of the internet telephony gateway 2; the third message processor 24 sending the account 231 to the Caller ID display module 10 and displays the account 231 thereon for the user's reference; the user pressing keys K on the conventional telephone 1 to select the account 231 he or she wants to call, and then dialing the keys K to make a call to another user that has a same internet telephony gateway 2 or has installed a same internet telephone service system 23.

The present invention further provides a device for applying internet telephone service system by conventional telephone, wherein the device comprises:
a conventional telephone 1 having a Caller ID display module 10 and a plurality of keys K that allows an user to dial and therefrom sends out a message M; and
an internet telephony gateway 2 signally connected to the conventional telephone 1, wherein the internet telephony gateway 2 includes:
   a first message processor 21 for receiving the message M sent from the conventional telephone for keys K;
   a second message processor 22 for receiving the message M sent from the
first message processor 21;
   an internet telephone service system 23 connected to internet I, for receiving the message M sent from the second message processor 22 and sending the message M to the second message processor 22 after connecting to the internet I; and
   a third message processor 24 for receiving the message M sent from the second message processor 22 and sending the message M to the Caller ID display module 10.

The first message processor 21 of the method according to the present invention is a DTMF system; and the third message processor 24 is a Caller ID generating system.

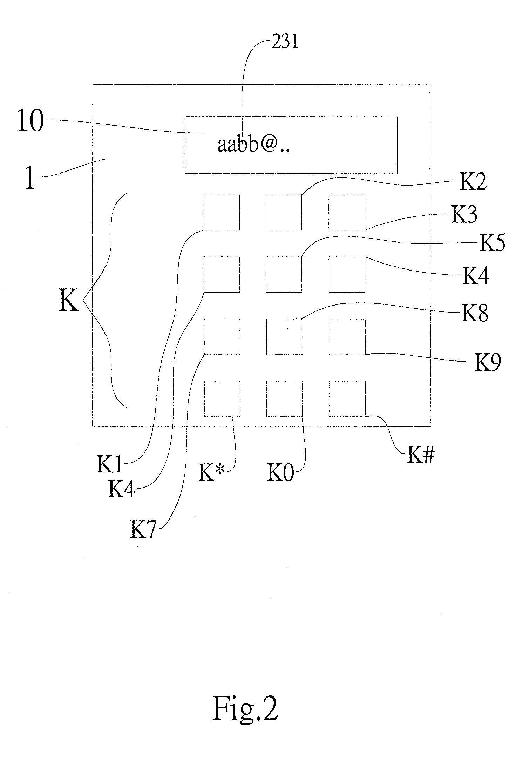

With reference to Fig. 2, the method for applying internet telephone service system by conventional telephone with internet telephony gateway can be operated in practice as below.

A conventional telephone 1 having a Caller ID display module 10 and a plurality of keys K as shown in Fig. 2, wherein the plurality of keys K comprises key 0 K0, key 1 K1, key 2 K2, key 3 K3, key 4 K4, key 5 K5, key 6 K6, key 7 K7, key 8 K8, key 9 K9, key * K*, and key # K#. The conventional telephone 1 is signally connected to an internet telephony gateway 2, wherein the internet telephony gateway 2 comprises a first message processor 21, a second message processor 22, an internet telephone service system 23 and a third message processor 24. The internet telephone service system 23 is connected to internet I and can be applied to most commonly used online services such as Skype, Google Talk or SIP. The conventional telephone 1 is signally connected to the first message processor 21, the first message processor 21 is signally connected to the second message processor 22, the second message processor 22 is signally connected to the internet telephone service system 23, the internet telephone service system 23 is signally connected to third message processor 24, and the third message processor 24 is signally connected to the Caller ID display module 10.

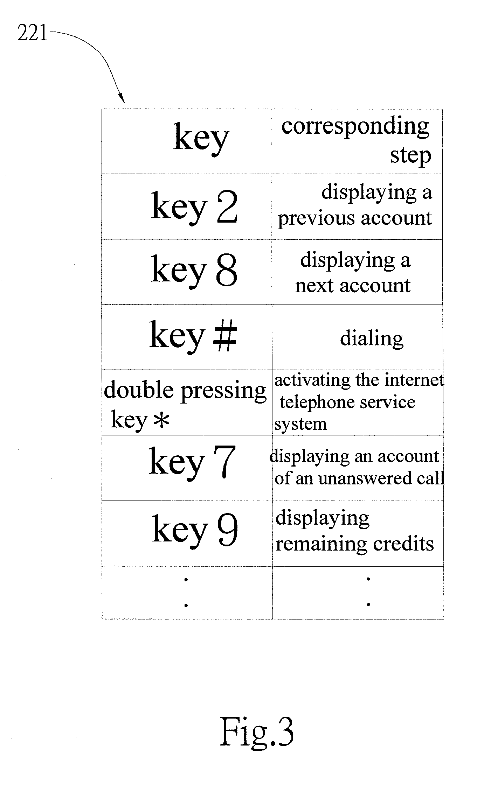

When the user is using an existing conventional telephone to make a call, he or she pick up the telephone handset and dial the number. The present invention comprises the conventional telephone 1 that works with the internet telephony gateway 2, wherein the user is capable of activating the internet telephone service system 23 by pressing one or more preset key K, and thereby making a call via the internet I. The preset key K can be a single key K, a plurality of keys K, or repeatedly dialing one same key K. With reference to Fig. 3, a command set 221 is built in the second message processor 22; one embodiment of the present invention is to preset the command set 221 as below:
pressing the key 2 K2 corresponds to the step of displaying a previous account 231;
pressing the key 8 K8 corresponds to the step of displaying a next account 231;
pressing the key # K# corresponds to the step of dialing; and
double pressing the key * K* corresponds to the step of activating the internet telephone service system 23 to allow operation for the user.

The first message processor 21 is a DTMF system, and the message M sent by the keys K of the conventional telephone 1 is a DTMF message. The first message processor 21 receives and converts the message M from analog message to digital message, and then sends the message M to the second message processor 22; and a matching is ran by the command set 221 on what kind of message M is to be sent to the internet telephone service system 23.

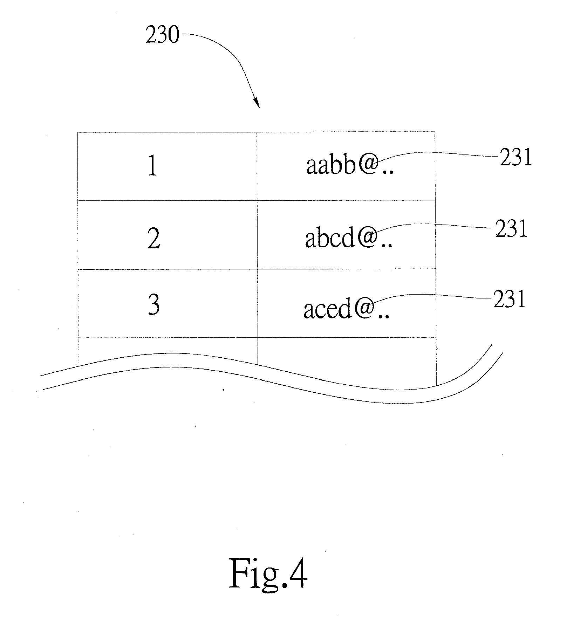

When the user double presses the key * K*, a message M is sent from the conventional telephone 1 to the first message processor 21. The first message processor 21 processes and sends the message M to the second message processor 22. The second message processor 22 sends the message M to the internet telephone service system 23, wherein as shown in Fig. 4, the internet telephone service system 23 then captures an account 231 arranged in the first order from the account menu 230, processes the account 231, and sends out the account 231 as the message M to the second message processor 22. The second message processor 22 sends the message M to the third message processor 24. The third message processor 24 sends the message M to the Caller ID display module 10 and the account 231 is displayed thereon for the user's reference. When the account 231 is not the target that the user wants to make a call to, he or she can select a previous or a next account 231 by pressing the key 2 K2 or the key 8 K8 until the target account 231 is shown on the Caller ID display module 10. The user can then press the key # K# to activate the internet telephone service system 23 to make a call to the account 231.

Further, the internet telephone service system 23 is also capable of calling local telephones or mobile phones. However, this kind of service usually requires the user to buy credits beforehand. Hence, in order to allow the user to check for the remaining credits conveniently, the present invention can preset the command set 221 as below:
pressing the key 9 K9 corresponds to the step of displaying remaining credits, as illustrated in Fig. 3.

Moreover, when the user wants to call another user via the internet telephone service system 23, and the call is missed, the present invention can also preset the command set 221 as below:
pressing the key 7 K7 corresponds to the step of displaying an account of an unanswered call, as illustrated in Fig. 3.
Upon pressing the corresponding key K, the related information will be displayed on the Caller ID display module 10 for the user's reference, and the following actions can be proceeded.

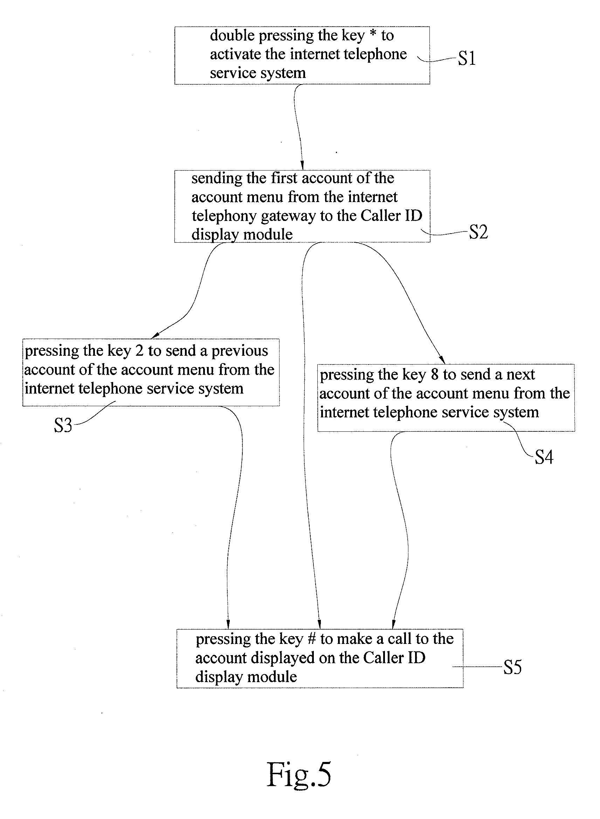

As the foregoing, and with reference to Fig. 5, the method for applying internet telephone service system by conventional telephone with internet telephony gateway allows the user to call an internet telephone via the internet telephony gateway 23 with steps of:
S 1: double pressing the key * K* to activate the internet telephone service system 23;
S2: sending the first account 231 of the account menu 230 from the internet telephony gateway 23 to the Caller ID display module 10;
S3: after the step of S2, pressing the key 2 K2 to send a previous account 231 of the account menu 230 from the internet telephone service system 23;
S4: after the step of S2, pressing the key 8 K8 to send a next account 231 of the account menu 230 from the internet telephone service system 23;
S5: after the step of S2, S3 or S4, pressing the key # K# to make a call to the account 231 displayed on the Caller ID display module 10.

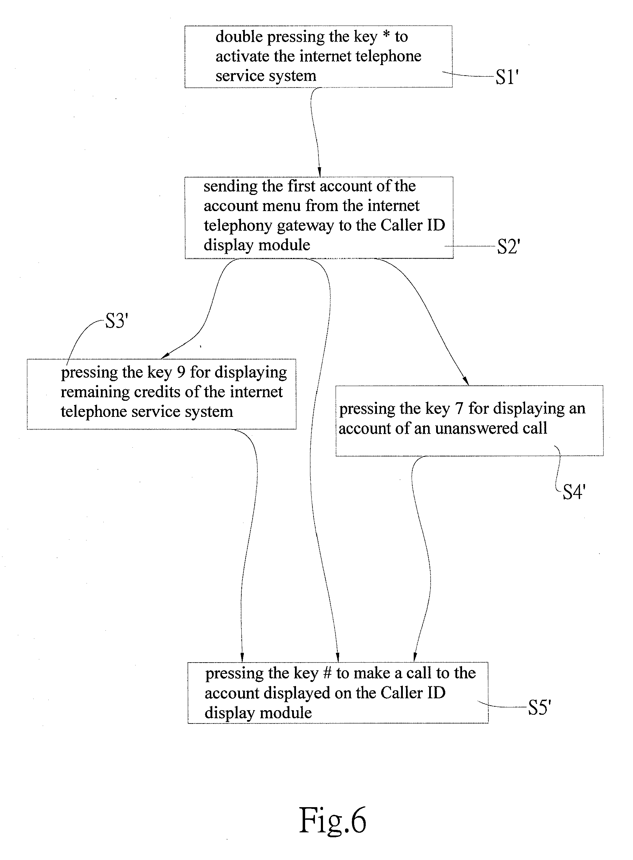

As shown in Fig. 6, the user is capable of operating other features of the internet telephony gateway 23 with the steps of:
S1': double pressing the key * K* to activate the internet telephone service system 23;
S2': sending the first account 231 of the account menu 230 from the internet telephony gateway 23 to the Caller ID display module 10;
S3': after the step of S2', pressing the key 9 K9 for displaying remaining credits of the internet telephone service system 23;
S4': after the step of S2', pressing the key 7 K7 for displaying an account 231 of an unanswered call;
S5': after the step of S2', S3' or S4', pressing the key # K# to make a call to the account 231 displayed on the Caller ID display module 10.

The method for applying internet telephone service by conventional telephone with internet telephony gateway of the present invention allows existing conventional telephone with Caller ID display module to work with the internet telephony gateway directly. Therefore, user who wants to use internet telephone only has to buy the internet telephony gateway of the present invention instead of other expensive internet telephone models.

The internet telephone service system of the internet telephony gateway cannot be changed after installation; however, the user can select the internet telephony gateway according to the internet telephone service system that he or she is used to.

Further, the user is capable of updating the account menu of the internet telephone service system via computer and internet; the internet telephone service system of the internet telephony gateway will be updated immediately with the updating on the computer.

Moreover, accounts in the internet telephone service system are usually comprised of alphabetic characters instead of numbers only; with the design of the present invention, the user is capable of dialing those internet telephones with no numbers using a conventional telephone.

While the invention has been described with reference to a preferred embodiment thereof, it is to be understood that modifications or variations may be easily made without departing from the spirit of this invention, which is defined in the appended claims.

## Claims

1. A method for applying internet telephone service by conventional telephone with internet telephony gateway, wherein the method comprises steps of:
providing a conventional telephone (1) having a Caller ID display module (10) and is signally connected to an internet telephony gateway(2); an user dialing keys (K) on the conventional telephone (1) from which a message (M) is sent to a first message processor (21) of the internet telephony gateway (2); the first message processor (21) processing the message (M) and sending the message (M) to a second message processor (22) of the internet telephony gateway (2); the second message processor (22) activating an internet telephone service system (23) of the internet telephony gateway (2) and retrieving the account menu (230) built-in the internet telephone service system (23); the second message processor (22) sending the account (231) to a third message processor (24) of the internet telephony gateway (2); the third message processor (24) sending the account (231) to the Caller ID display module (10) and
displays the account (231) thereon for the user's reference; the user pressing keys (K) on the conventional telephone (1) to select the account (231) he or she wants to call,
and then dialing the keys (K) to make a call to another user that has a same internet telephony gateway (2) or has installed a same internet telephone service system (23).

2. The method for applying internet telephone service by conventional telephone with internet telephony gateway as defined in claim 1, wherein the first message processor (21) is a DTMF system.

3. The method for applying internet telephone service by conventional telephone with internet telephony gateway as defined in claim 1, wherein the third message processor (24) is a Caller ID generating system.

4. The method for applying internet telephone service by conventional telephone with internet telephony gateway as defined in claim 1, wherein a command set (221) is built in the second message processor (22) for running a matching on what kind of message (M) is to be sent to the internet telephone service system (23) according to the message (M) received from the first message processor (21).

5. The method for applying internet telephone service by conventional telephone with internet telephony gateway as defined in claim 1, wherein the user is capable of checking the information provided by the internet telephone service system (23) via the keys (K) and the Caller ID display module (10).

## Amended claims

### Amended claims in accordance with Rule 137(2) EPC.

**1.** A method for applying internet telephone service by analogue telephone with internet telephony gateway, wherein the method comprises steps of:
sending an analogue message (M) by user dialing keys (K) on an analogue telephone (1) without internet telephony function, which has a Caller ID display module (10) and is signally connected to an internet telephony gateway (2), to a first message processor (21) of the internet telephony gateway (2);
the first message processor (21) processing the analogue message (M) and sending a digital message to a second message processor (22) of the internet telephony gateway (2);
the second message processor (22) activating an internet telephone service system (23) of the internet telephony gateway (2) and retrieving an account menu (230) built in the internet telephone service system (23);
the second message processor (22) sending an account (231) to a third message processor (24) of the internet telephony gateway (2);
the third message processor (24) sending the account (231) to the Caller ID display module (10) and displays the account (231) thereon for the user's reference;
selecting an account (231) the user wants to call by the user pressing keys (K) on the analogue telephone (1) and then by dialing keys making a call to another user that has a corresponding internet telephony gateway (2) or has installed a corresponding internet telephone service system (23).

**2.** The method for applying internet telephone service by analogue telephone with internet telephony gateway as defined in claim 1, wherein the first message processor (21) is a DTMF system.

**3.** The method for applying internet telephone service by analogue telephone with internet telephony gateway as defined in claim 1, wherein the third message processor (24) is a Caller ID generating System.

**4.** The method for applying internet telephone service by analogue telephone with internet telephony gateway as defined in claim 1, wherein a command set (221) is built in the second message processor (22) for running a matching on what kind of message (M) is
to be sent to the internet telephone service system (23) according to the message (M) received from the first message processor (21).

**5.** The method for applying internet telephone Service by analogue telephone with internet telephony gateway as defined in claim 1, wherein the user is capable of checking the information provided by the internet telephone service system (23) via the keys (K) and the Caller ID display module (10).
